# EUROPEAN PATENT SPECIFICATION

(11) **EP 2 482 160 B1**
(45) Date of publication and mention of the grant of the patent: **06.11.2013**
(21) Application number: 11000635.0
(22) Date of filing: 27.01.2011
(51) Int. Cl.: G05D 16/06, G05D 7/01

(54) **Valve arrangement for controlling a flow of a heating or cooling fluid**
Ventilanordnung zur Regelung des Durchflusses einer Heiz- oder Kühlflüssigkeit
Agencement de soupape pour contrôler le débit d'un fluide de chauffage ou de refroidissement

(43) Date of publication of application: 01.08.2012
(73) Proprietor: Danfoss A/S, 6430 Nordborg (DK)
(72) Inventor: Christensen, Morten Hedegaard, 8963 Auning (DK); Bjerggaard, Niels, 8370 Hadsten (DK); Hölck, Poul, 8300 Odder (DK); Krogh, Tina, Vassard, 8960 Randers (DK); Rasmussen, Bent, Karsten, 8600 Silkeborg (DK)
(74) Representative: Knoblauch, Andreas

(56) References cited:
- DE-B3- 10 256 035
- DE-U1-202004 003 860
- US-A- 5 860 591

## Description

The invention relates to a valve arrangement for controlling a flow of a heating or cooling fluid, said valve arrangement comprising: a housing having an inlet and an outlet, a pressure regulating valve being arranged between said inlet and outlet and having a regulating valve element and a regulating valve seat, said regulating valve element being connected to a membrane, said membrane having a flexible part and being loaded on one side by an inlet pressure at the inlet and on the opposite side by an outlet pressure at the outlet.

Such a valve is known from DE 102 56 035 B3. The pressure regulating valve is used to adjust a constant pressure difference over the control valve during normal operation so that the flow through the flow control valve depends directly on the opening degree of the flow control valve.

Usually such a valve arrangement operates reliably over a long time period. However, under certain conditions the valve arrangement can be damaged. In this case it is rather complicated to repair the valve arrangement since the flow through the valve arrangement has to be interrupted outside of the valve arrangement in order to be able to change parts of the valve arrangement.

The task underlying the invention is to reduce the risk of damages.

This task is solved in that a membrane supporting structure is provided, said supporting structure supporting said flexible part of said membrane when a force or a pressure acting on the membrane exceeds a predetermined value.

When a large pressure difference occurs over the membrane this pressure difference is no longer able to destroy the membrane. This pressure difference just presses the flexible part of the membrane against the supporting structure. No further movement of the flexible part of the membrane is possible. Furthermore, there is no extensive stretching of the flexible part of the membrane which could lead to a rupture of the membrane. The membrane lies against the supporting structure over almost its entire free part. It is possible that some rounded parts of the membrane are not directly supported by the supporting structure. However, this is not a problem since in the rounded parts of the membrane there is no possibility of overstretching the membrane. Therefore, the supporting structure prevents rupture of the membrane.

In a preferred embodiment at least a part of said supporting structure is formed by the housing. The housing has sufficient stability to support the flexible part of the membrane even against a rather high pressure difference over the membrane. In many cases it is rather easy to give the inside of the housing the necessary form to support the membrane against an excessive pressure difference.

Alternatively or additionally the supporting structure is at least partly formed by an insert arranged in said housing. In some cases it is easier to use an insert as a part of the supporting structure. Such an insert can easily be given a form which is necessary to support the membrane against excessive pressure differences.

Preferably said membrane is fixed to the regulating valve element by means of a fixing means, said fixing means having a surface extending in a circumferential direction and supporting a radial inner face of the flexible part of said membrane. In this case the fixing element is part of the supporting structure. This embodiment has the advantage that the membrane is supported at its radial inner face over the entire stroke of the regulating valve element. In this case the protection given by the supporting structure starts already at low pressure differences.

Preferably the flow control valve is closed when said membrane is supported by that supporting structure. In this case the membrane together with the pressure regulating valve can be used to completely close the inlet of the valve arrangement so that the flow through the valve is interrupted. In this case other parts of the system downstream the flow control valve, e.g. a radiator, can be removed and exchanged without the necessity of interrupting the flow to the inlet of the valve arrangement at other parts of a heating or cooling system. When for example the radiator is to be exchanged, the pressure at the outlet of the valve arrangement is reduced to atmospheric pressure. In this case the pressure difference over the membrane would be highest. However, there is no risk of damage since the supporting structure supports the membrane. The membrane prevents a flow of heating or cooling fluid from the inlet to the outlet. The regulating valve element together with the regulating valve seat prevents a flow of heating or cooling fluid from the inlet to the part of the valve arrangement at which the flow control valve is arranged.

Preferably a minimum distance between the fixing element and another part of the supporting structure is smaller than 190% of the thickness of the membrane. If there are any gaps in the supporting structure these gaps are smaller than the double of the thickness of the membrane so that the membrane in folded state cannot penetrate through the gap.

Preferably the pressure regulating valve forms a second supporting structure for the membrane at which the membrane can rest when a pressure difference between the inlet and the outlet has fully opened the pressure regulating valve. In rare cases it is possible that the force produced by the pressure at the outlet exceeds the force produced by the pressure at the inlet. In this case the pressure regulating valve is fully open which could lead to the risk that the membrane is damaged by a pressure difference acting in the opposite direction compared to the cases mentioned above. In this case the housing of the pressure regulating valve is formed as a second supporting structure so that the risk of damaging is reduced also in such a case.

A preferred embodiment of the invention will now be described in more detail with reference to the drawing, wherein:
- Fig. 1: is a section of a valve arrangement and
- Fig. 2: is an enlarged detail A of Fig. 1.

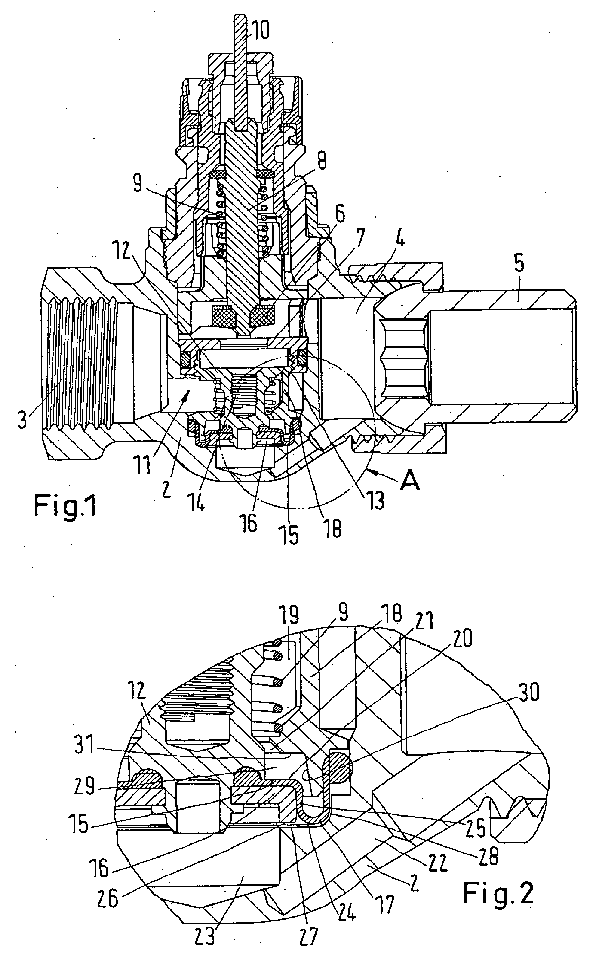

Fig. 1 shows a valve arrangement 1 having a housing 2, the housing 2 having an inlet 3 and an outlet 4. The outlet 4 is connected to an outlet tube 5.

A control valve comprising a control valve element 6 and a control valve seat 7 is arranged between the inlet 3 and the outlet 4. The control valve element 6 is connected to a spindle 8 which is loaded in an opening direction by a control valve spring 9. The spindle 8 can be actuated by means of a thermostatic actuator (not shown) via a rod 10. However, other means can be used as well for actuating the spindle 8, e.g. a protecting cap, a wheel, an electrical motor and so on.

When the control valve element 6 is moved in a direction towards the control valve seat 7 the flow from the inlet 3 to the outlet 4 is throttled. When the control valve element 6 is moved in a direction away from the control valve seat 7 the flow resistance of the control valve is decreased.

A pressure regulating valve 11 is arranged between the inlet 3 and the flow control valve 6, 7. This pressure regulating valve 11 comprises a regulating valve element 12, cooperating with a regulating valve seat 13. In Fig. 1 the pressure regulating valve 11 is closed since the regulating valve element 12 rests against the regulating valve seat 13.

The regulating valve element 12 is loaded by a spring 39 (Fig. 2) in an opening direction, i.e. in a direction away from the regulating valve seat 13.

The regulating valve element 12 is connected to a membrane 15 by means of a fixing element 16. The membrane has a flexible part 17 in which the membrane can be deformed when the regulating valve element 12 is moved.

The pressure regulating valve 11 comprises a cage like housing 18. The regulating valve seat 13 is part of the housing 18. The regulating valve element 12 is positioned within the housing 18 over the greatest part of its length. The spring 39 is arranged between the housing 18 and the regulating valve element 12.

The inlet 3 is in fluid connection with the interior 19 of the housing 18. Therefore, the fluid pressure of the inlet 3 acts on the upper side 20 of the membrane 15 via a gap 21 between the regulating valve element 12 and the housing 18. This pressure coming from the inlet 3 acts on the membrane 15 so that the regulating valve element is moved towards the regulating valve seat 13. The directions "upper" and "lower" refer to the illustration in the drawing. It is not necessary to use the valve arrangement with the same spatial orientation in reality.

A connecting channel 22 is provided between the outlet 4 and a chamber 23 which is arranged in connection with the lower side 24 of the membrane 15. Therefore, the pressure at the outlet 4 acts on the membrane 15 in a direction in which the regulating valve element 12 moves away from the regulating valve seat 13.

In the embodiment shown the fixing element 16 has the form of a flat disk having a circumferential wall 25 extending downwardly in a direction towards the chamber 23. This wall 25 is dimensioned such when the pressure regulating valve 11 is closed this wall 25 forms a gap 26 with the housing 2. The gap 26 has a thickness which is smaller than the double of the thickness of the membrane 15. Preferably this thickness of the gap 26 is smaller than 190 % of the thickness of the membrane 15 and in a preferred embodiment the thickness of the gap 26 should be in a range between 75 % and 150 % of the thickness of the membrane 15.

When a pressure difference between the inlet 3 and the outlet 4 exerts a force on the membrane 15 exceeding the force of the spring 9 the regulating valve element 12 is moved to close the pressure regulating valve 11. No further movement of the regulating valve element 12 is possible. In this case the membrane 15, in particular the flexible part 17 of the membrane 15 could be subjected to a stretching which could lead to a rupture of the membrane 15.

In the present embodiment such excessive stretching is prevented in the following way:
The housing 2 has a bottom surface 27 at which the flexible part 17 of the membrane 15 can rest when the pressure regulating valve 11 is closed and there is still a large pressure difference between the inlet 3 and the outlet 4. Furthermore, the housing 2 forms a surrounding wall 28 preventing a radial stretching of the membrane 15 to the outside. The wall 25 of the fixing element 16 prevents a stretching of the flexible part 17 of the membrane 15 radially inwardly. The elements 25, 27 and 28 form a supporting structure preventing an excessive stretching of the membrane thereby reducing the risk of damaging the membrane 15.
The housing 18 has at its lower end (i.e. the end neighbouring the membrane 15) a chamber 29 for receiving the membrane 15 when a pressure regulating valve 11 is opened. This chamber 29 is limited in radial direction by a circumferential wall 30 (which could have the form of a part of a cone) and an upper wall 31 at which the membrane 15 can rest when the pressure regulating valve 11 is fully opened. The circumferential wall 30 together with the upper wall 31 prevents excessive stretching of the membrane 15 in a case in which the pressure at the outlet 4 is much larger than the pressure at the inlet 3. Since in this case the membrane 15 is clamped between the upper wall 31 and the fixing element 16 it is only necessary to support the flexible part 17 of the membrane by means of the circumferential wall 30 and a radially outer part of the upper wall 31. The circumferential wall 30 and the upper wall 31 form a second supporting structure for the membrane 15.

The valve arrangement 1 can be used in connection with a heating system, e.g. a radiator or a flow heating line, or in connection with a cooling system, e.g. a cooling cealing. In both cases parts downstream the flow control valve 6, 7 can be repaired or exchanged without interrupting the flow to the inlet 3 by other means since the pressure regulating valve 11 completely shuts off the inlet 3 and the flow through the flow control valve 6, 7 when the pressure difference between the inlet 3 and the outlet 4 is larger than the force of the spring 9.

It is also possible to form the supporting structure with the help of an insert (not shown) which can be placed in the housing 2. Such an insert can be adapted to the form of the membrane in the state shown in Fig. 2.

## Claims

1. A valve arrangement (1) for controlling a flow of a heating or cooling fluid, said valve arrangement (1) comprising: a housing (2) having an inlet (3) and an outlet (4), a pressure regulating valve (11) being arranged between said inlet (3) and said outlet (4) and having a regulating valve element (12) and a regulating valve seat (13), said regulating valve element (12) being connected to a membrane (15), said membrane (15) having a flexible part (17) and being loaded on one side by an inlet pressure at the inlet (3) and on the opposite side by an outlet pressure at the outlet (4), **characterized in that** a membrane supporting structure (25, 27, 28) is provided, said supporting structure (25, 27, 28) supporting said flexible part (17) of said membrane (15) when a force or a pressure acting on the membrane (15) exceeds a predetermined value.

2. The valve arrangement according to claim 1, **characterized in that** at least a part of said supporting structure (25, 27, 28) is formed by said housing (2).

3. The valve arrangement according to claim 1 or 2, **characterized in that** said supporting structure is at least partly formed by an insert arranged in said housing (2).

4. The valve arrangement according to any of claims 1 to 3, **characterized in that** said membrane (15) is fixed to the regulating valve element (12) by means of a fixing means (16), said fixing means (16) having a surface (25) extending in a circumferential direction and supporting a radial inner face of the flexible part (17) of said membrane.

5. The valve arrangement according to any of claims 1 to 4, **characterized in that** the flow control valve (6, 7) is closed when said membrane (15) is supported by said supporting structure (25, 27, 28).

6. The valve arrangement according to claim 6, **characterized in that** a minimum distance (26) between the fixing element (16) and another part of the supporting structure is smaller than 190 % of the thickness of the membrane (15).

7. The valve arrangement according to any of claims 1 to 6, **characterized in that** the pressure regulating valve (11) forms a second supporting structure (30, 31) for the membrane (15) at which the membrane (15) can rest when a pressure difference between the inlet (3) and the outlet (4) has fully opened the pressure control valve (11).

## Patentansprüche

1. Ventilanordnung (1) zur Regelung eines Durchflusses einer Heizungs- oder Kühlflüssigkeit mit: einem Gehäuse (2) mit einem Einlass (3) und einem Auslass (4), einem Druckregelungsventil (11), das zwischen dem Einlass (3) und dem Auslass (4) angeordnet ist und ein regulierendes Ventilelement (12) und einen regulierenden Ventilsitz (13) aufweist, wobei das regulierende Ventilelement (12) mit einer Membran (15) verbunden ist, die einen flexiblen Teil (17) aufweist und auf der einen Seite von einem Einlassdruck am Einlass (3) und auf der anderen Seite von einem Auslassdruck am Auslass (4) belastet wird, **dadurch gekennzeichnet, dass** eine Membranunterstützungsstruktur (25, 27, 28) vorgesehen ist, die den flexiblen Teil (17) der Membran (15) unterstützt, wenn eine auf die Membran (15) wirkende Kraft oder Druck einen vorbestimmten Wert übersteigt.

2. Die Ventilanordnung nach Anspruch 1, **dadurch gekennzeichnet, dass** zumindest ein Teil der Unterstützungsstruktur (25, 27, 28) durch das Gehäuse (2) gebildet ist.

3. Die Ventilanordnung nach Anspruch 1 oder 2, **dadurch gekennzeichnet, dass** die Unterstützungsstruktur zumindest teilweise durch einen im Gehäuse (2) angeordneten Einsatz gebildet ist.

4. Die Ventilanordnung nach einem der Ansprüche 1 bis 3, **dadurch gekennzeichnet, dass** die Membran (15) mit Hilfe eines Befestigungsmittels (16) am regulierenden Ventilelement (12) befestigt ist, wobei das Befestigungsmittel (16) eine Oberflache (25) hat, die sich in Umfangsrichtung erstreckt und eine radiale innere Flache des flexiblen Teils (17) der Membran unterstützt.

5. Die Ventilanordnung nach einem der Ansprüche 1 bis 4, **dadurch gekennzeichnet, dass** ein Durchflussregelungsventil (6, 7) geschlossen ist, wenn die Membran (15) durch die Unterstützungsstruktur (25, 27, 28) unterstützt ist.

6. Die Ventilanordnung nach Anspruch 4 oder 5, **dadurch gekennzeichnet, dass** ein Mindestabstand (26) zwischen dem Befestigungselement (16) und einem anderen Teil der Unterstützungsstruktur kleiner als 190% der Dicke der Membran (15) ist.

7. Die Ventilanordnung nach einem der Ansprüche 1 bis 6, **dadurch gekennzeichnet, dass** das Druckregelungsventil (11) eine zweite Unterstützungsstruktur (30, 31) für die Membran (15) bildet, an der die Membran (15) anlegen kann, wenn eine Druckdifferenz zwischen dem Einlass (3) und dem Auslass (4) das Druckregelungsventil (11) vollständig geöffnet hat.

## Revendications

1. Agencement de soupape (1) pour contrôler un écoulement d'un fluide de chauffage ou de refroidissement, ledit agencement de soupape (1) comprenant : un boîtier (2) comportant un orifice d'admission (3) et un orifice d'évacuation (4), une soupape de régulation de pression (11) étant disposée entre ledit orifice d'admission (3) et ledit orifice d'évacuation (4) et comportant un élément de soupape de régulation (12) et un siège de soupape de régulation (13), ledit élément de soupape de régulation (12) étant connecté à une membrane (15), ladite membrane (15) ayant une partie souple (17) et étant chargée sur un côté par une pression d'admission au niveau de l'orifice d'admission (3) et sur le côté opposé par une pression d'évacuation au niveau de l'orifice d'évacuation (4), **caractérisé en ce qu'**une structure de support de membrane (25, 27, 28) est prévue, ladite structure de support (25, 27, 28) supportant ladite partie souple (17) de ladite membrane (15) lorsqu'une force ou une pression agissant sur la membrane (15) dépasse une valeur prédéterminée.

2. Agencement de soupape selon la revendication 1, **caractérisé en ce qu'**au moins une partie de ladite structure de support (25, 27, 28) est formée par ledit boîtier (2).

3. Agencement de soupape selon la revendication 1 ou 2, **caractérisé en ce que** ladite structure de support est au moins en partie formée par un élément inséré dans ledit boîtier (2).

4. Agencement de soupape selon l'une quelconque des revendications 1 à 3, **caractérisé en ce que** ladite membrane (15) est fixée à l'élément de soupape de régulation (12) par l'intermédiaire de moyens de fixation (16), lesdits moyens de fixation (16) ayant une surface (25) qui s'étend dans une direction périphérique .et qui porte une face interne radiale de la partie souple (17) de ladite membrane.

5. Agencement de soupape selon l'une quelconque des revendications 1 à 4, **caractérisé en ce que** une soupape de contrôle de l'écoulement (6,7) est fermée lorsque ladite membrane (15) est portée par ladite structure de support (25, 27, 28).

6. Agencement de soupape selon la revendication 4 ou 5, **caractérisé en ce qu'**une distance minimale (26) entre l'élément de fixation (16) et une autre partie de la structure de support est plus faible que 190 % de l'épaisseur de la membrane (15).

7. Agencement de soupape selon l'une quelconque des revendications 1 à 6, **caractérisé en ce que** la soupape de régulation de pression (11) forme pour la membrane (15) une deuxième structure de support (30, 31), contre laquelle la membrane (15) peut s'appuyer lorsqu'une différence de pression entre l'orifice d'admission (3) et l'orifice d'évacuation (4) a complètement ouvert la soupape de contrôle de la pression (11).
